# EUROPÄISCHE PATENTSCHRIFT

(11) **EP 0 845 422 B1**
(45) Veröffentlichungstag und Bekanntmachung des Hinweises auf die Patenterteilung: **29.03.2000**
(21) Anmeldenummer: 96118685.5
(22) Anmeldetag: 21.11.1996
(51) Int. Cl.: B65D 35/22, B65B 29/10, B29D 23/20

(54) **Verfahren zur Herstellung von Rohrkörpern**
Method for producing tubular articles
Procédé de fabrication de corps tubulaires

(43) Veröffentlichungstag der Anmeldung: 03.06.1998
(73) Patentinhaber: AISA AUTOMATION INDUSTRIELLE SA, 1896 Vouvry (CH)
(72) Erfinder: Keller, Gerhard, 1805 Jongny (CH)
(74) Vertreter: Patentanwälte Zellentin & Partner

(56) Entgegenhaltungen:
- EP-A- 0 340 657
- FR-A- 2 250 681
- GB-A- 1 030 275
- US-A- 3 788 520
- US-A- 4 089 437

## Beschreibung

Die Erfindung betrifft ein Verfahren gemäß dem Oberbegriff der Ansprüche 1 und 9. Ein derartiges Verfahren ist aus FR-A-2.250681 bekannt. Ein Verfahren zur Herstellung von, insbesondere mehrschichtigen, Rohrkörpern mit mindestens einer sich über seine Länge erstreckenden nebeneinander liegende Längskammern bildenden Trennwand, unter Verwendung eines Folienbandes, wobei zunächst auf dem Folienband oder einem abgelängten Folienbandabschnitt ein Trennwandstreifen bzw. ein abgelängter Trennwandstreifenabschnitt in paralleler Ausrichtung zum Folienband bzw. Folienbandabschnitt befestigt wird und dann die Seitenkanten zur Bildung eines endlosen Rohres, von dem dann Rohrkörper abgelängt werden, bzw. direkt eines Rohrkörpers miteinander verbunden werden, ist aus der am 03-01-97 veröffentlichten Anmeldung PCT/EP96/02645 (=WO-A-9700208, mit Anmeldedatum 19/06/96 und Prioritätsdatum 19/06/95) bekannt.

Aufgabe der Erfindung ist es, weitere vorteilhafte Ausgestaltungen des Verfahrens anzugeben.

Diese Aufgabe wird durch ein Verfahren mit den Merkmalen des Anspruchs 1 gelöst, wobei in den Unteransprüchen 2 bis 8 vorteilhafte Ausgestaltungen wiedergegeben sind. Die Aufgabe wird auch durch ein Verfahren mit den Merkmalen des Anspruchs 9 gelöst, wobei die Ansprüche 10 und 11 vorteilhafte Ausgestaltungen wiedergeben.

Nachstehend wird die Erfindung anhand von Ausführungsbeispielen unter Bezug auf schematische Zeichnungen näher erläutert. Es zeigt:
- Fig. 1 a: einen extrudierten Schlauch, der an einer Stelle auf einem Folienband befestigt ist, im Querschnitt;
- b: einen Querschnitt durch einen fertigen Rohrkörper;
- Fig. 2 a: einen Schlauch mit einer Überlappungsnaht, der an zwei Stellen auf einem Folienband befestigt, ist im Querschnitt;
- b: einen Querschnitt durch einen fertigen Rohrkörper;
- Fig. 3 a: einen U-förmig hergestellten Schlauch, dessen freie Schenkelenden parallel zueinander unter Belassung eines freien Endes an einer Stelle auf einem Folienband befestigt ist, im Querschnitt;
- b: einen Querschnitt durch einen fertigen Rohrkörper;
- Fig. 4 a: zwei auf einem Folienband befestigte Folienstreifen, wobei der eine an zwei Stellen aufdem Folienband unter Belassung freier Enden und der zweite unmittelbar mit seinen Enden einerseits auf dem Folienband andererseits auf dem ersten Streifen befestigt ist, im Querschnitt;
- b: einen Querschnitt durch einen fertigen Rohrkörper;
- Fig. 5: eine Draufsicht auf einen Rohrkörper, der entlang einer Linie ununterbrochen und entlang einer weiteren Linie an beabstandeten Punkten auf einem Folienbandabschnitt befestigt ist.

Nachstehend wird zur Erläuterung der Erfindung ausschließlich von Folienband gesprochen, wobei darunter auch abgelängte Folienbandabschnitte verstanden werden, entsprechendes gilt für Trennwandstreifen und abgelängte Trennwandstreifen, für ein endloses Rohr und abgelängte Rohrkörper sowie für einen Schlauch und Schlauchabschnitte.

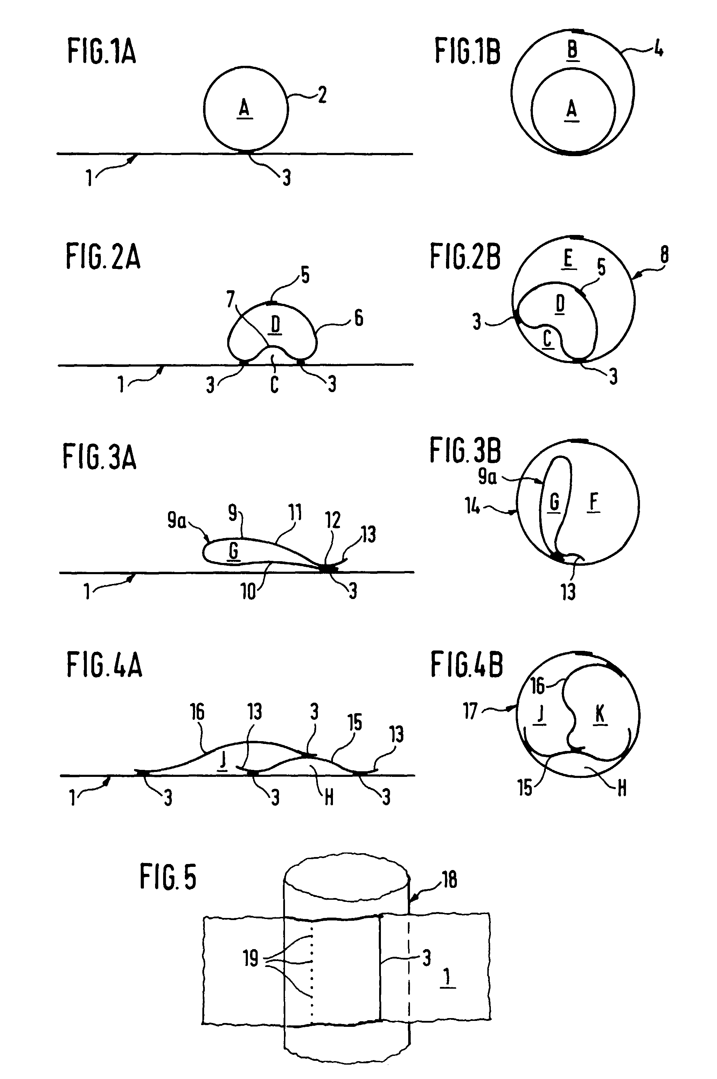

Bei dem in Fig.1 dargestellten Ausführungsbeispiel ist auf ein beliebiges Folienband 1 aus einem bekannten und geeigneten Kunststoff ein rundum geschlossener (ohne Naht) extrudierter Schlauch 2 mittels einer Verbindung 3 fest angeordnet. Die Verbindung kann durch beliebige geeignete Verfahren durch Kleben, Anschmelzen u. a. erfolgen. Nach Herstellung des Rohrkörpers 4 (s. Fig. 1b) durch Verbinden der freien Längskanten des Folienbandes 1 bestehen zwei Längskammern A und B.

Bei dem in Fig. 2 dargestellten Ausführungsbeispiel ist auf einem Folienband 1 ein durch Bildung einer Naht 5 hergestellter Schlauch 6 mittels zweier beabstandet zueinander angeordneter Verbindungen 3 befestigt. Hierbei ist vorzugsweise der Schlauch 6 so auf dem Folienband 1 befestigt, daß sein zwischen den Verbindungen 3 liegender Abschnitt eine Ausstülpung 7 bildet, so daß auf einfache Weise mittels der Anordnung des Schlauches 6 am Folienband 1 bereits zwei Längskammern C und D gebildet werden. Wenn das Folienband 1 zur Bildung des Rohrkörpers 8 (s. Fig. 2b) mittels seiner beiden Längskanten verbunden ist, bestehen somit drei Längskammern C, D und E, die jeweils voneinander isoliert sind.

Bei dem in Fig. 3 dargestellten Ausführungsbeispiel ist auf einem Folienband 1 ein Trennwandstreifen 9 aus einem bekannten und geeigneten Kunststoff in paralleler Ausrichtung zum Folienband 1 angeordnet, wobei der Trennwandstreifen 9 U-förmig geformt ist und seine beiden Schenkel 10, 11 in paralleler Ausrichtung miteinander durch eine Verbindung 12 aneinander befestigt und einen Schlauch 9a und damit eine geschlossene Längskammer G bilden. Vorzugsweise ist mindestens ein Schenkel 10 oder 11 über die Verbindung 12 unter Bildung eines freien Randes 13 hinausragend angeordnet. Bei geschlossenem durch Verbindung der freien Längskanten des Folienbandes 1 hergestelltem Rohrkörper 14 (Fig. 3b) kann der freie Rand 13 des jeweiligen geschlossenen Schlauchs 9a, in dem sich sein freies Ende gegen die Innenwand des Rohrkörpers 14 abstützt, dem Schlauch 9a eine vorgegebene Lage innerhalb des Rohrkörpers 14 geben, die beispielsweise ein Zentrieren des geschlossenen Trennwandstreifens 9 innerhalb des gebildeten Rohrkörpers 14 zu erzielen ermöglicht. Nach Bildung des Rohrkörpers 14 durch Verbinden der Längskanten des Folienbandes 1 bestehen somit zwei Längskammern G und F.

In Fig. 4 ist ein Ausführungsbeispiel dargestellt, bei dem auf einem Folienband 1 in paralleler Ausrichtung zunächst ein erster Trennwandstreifen 15 unter Bildung freier Ränder 13 mittels Verbindungen 3 befestigt ist. Ein zweiter Trennwandstreifen 16 ist in paralleler Ausrichtung mit seiner einen Längskante auf dem Folienband 1 und mit seiner anderen Längskante auf dem ersten Trennwandstreifen 15 mittels Verbindungen 3 angeordnet. Hierdurch werden im fertigen Rohrkörper 17 drei geschlossene Längskammern H, J, K s. Fig. 4b gebildet.

Fig. 5 zeigt einen Schlauchabschnitt 18, der mittels einer linearen Verbindung 3 auf einem Abschnitt eines Folienbandes 1 befestigt ist. Die Befestigung kann aber auch mittels linear angeordneter beabstandeter Punktverbindungen 19 erfolgen.

Statt eines einzigen Schlauches können auch mehrere Schläuche beliebiger Konstruktion nebeneinander auf einem Folienband wie auch mehr als zwei einander überlappende Trennwandstreifen vorgesehen sein.

Die Anordnung mehrerer Schläuche bzw. Trennwandstreifen auf einem Folienband kann so erfolgen, daß im gebildeten fertigen Rohrkörper eine bestimmte Aufteilung der Längskammern über den Querschnitt des Rohrkörpers erfolgen kann, insbesondere dahingehend, daß praktisch der gesamte Querschnitt des Rohrkörpers durch Längskammern ausgefüllt ist, wobei ihre Wände auch dicht aneinander anliegen können.

Die freien Ränder 13 können nicht nur abgewinkelt, sondern auch vorgeformt sein, z. B. geknickt, gewölbt, um damit eine weitere Ausrichtung bzw. eine Öffnung/Aufspreizung der gebildeten Längskammern innerhalb des fertigen Rohrkörpers zu erzielen.

Selbstverständlich können auch die durch eine Längsnaht hergestellten Schläuche freie Ränder 13 aufweisen.

Insbesondere bei Trennwandstreifen kann es auch vorteilhaft sein, die Ränder 13 mindestens an einer Befestigungsstelle umgeklappt nach innen gerichtet auszuführen, um durch deren Federkraft eine zwangsweise Öffnung der durch den jeweiligen Trennwandstreifen gebildeten Längskammer innerhalb des fertigen Rohrkörpers zu gewährleisten.

Bei einer Befestigung eines oder mehrerer Schläuche und/oder eines oder mehrerer Trennwandstreifen mittels jeweils zweier beabstandeter Verbindungen können diese so angeordnet sein, daß der so befestigte Schlauch bzw. Trennwandstreifen im fertigen Rohrkörper zwischen den Verbindungen parallel am Rohrkörper anliegt oder eine Ausstülpung oder eine Sehne bildet. Im letzteren Falle wäre das aufnehmende Folienband vorzuwölben z. B. durch teilweises Anordnen in einer gewölbten Rinne.

## Patentansprüche

1. Verfahren zur Herstellung von, insbesondere mehrschichtigen, Rohrkörpern (4, 8, 14) mit mindestens einer sich über seine Länge erstreckenden nebeneinander liegende Längskammern (A, B; C, D, E; F, G;) bildenden Trennwand, unter Verwendung eines Folienbandes (1), dadurch gekennzeichnet, daß zunächst auf dem Folienband (1) oder einem abgelängten Folienbandabschnitt ein Trennwandstreifen bzw. ein abgelängter Trennwandstreifenabschnitt in paralleler Ausrichtung zum Folienband bzw. Folienbandabschnitt befestigt wird und dann die Seitenkanten zur Bildung eines endlosen Rohres, von dem dann Rohrkörper abgelängt werden, bzw. direkt zur Bildung eines Rohrkörpers miteinander verbunden werden, wobei der Trennwandstreifen bzw. der Trennwandstreifenabschnitt aus mindestens einem Schlauch (2; 6; 9a) bzw. Schlauchabschnitt hergestellt wird.

2. Verfahren nach Anspruch 1, **dadurch gekennzeichnet**, daß mindestens ein Schlauch (2) bzw. ein Schlauchabschnitt aus einem extrudierten Schlauch hergestellt wird.

3. Verfahren nach Anspruch 1, **dadurch gekennzeichnet,** daß mindestens ein Schlauch (6; 9a) bzw. ein Schlauchabschnitt aus einer Folie bzw. einem Folienabschnitt mit einer Verbindungsnaht (5; 12) hergestellt wird.

4. Verfahren nach Anspruch 3, **dadurch gekennzeichnet,** daß der Trennwandstreifen (9) bzw. der Trennwandstreifenabschnitt zu einem U geformt und dann seine beiden Schenkel (10, 11) in ihren parallelen Schenkellagen zu einem Schlauch (9a) miteinander verbunden werden.

5. Verfahren nach Anspruch 4, **dadurch gekennzeichnet,** daß die beiden Schenkel (10, 11) unter Bildung mindestens eines freien Randes (13) miteinander verbunden werden.

6. Verfahren nach Anspruch 5, **dadurch gekennzeichnet,** daß mindestens ein freier Rand (13) unter einem Winkel zur Fläche des Folienbandes (1) bzw. des Folienbandabschnittes angeordnet wird.

7. Verfahren nach einem der Ansprüche 1 bis 6, **dadurch gekennzeichnet,** daß jeder Schlauch bzw. jeder Schlauchabschnitt entlang mindestens einer Linie am Folienband (1) bzw. Folienbandabschnitt befestigt wird.

8. Verfahren nach Anspruch 7, **dadurch gekennzeichnet,** daß die Befestigung entlang einer Linie über beabstandete Punktverbindungen (19) durchgeführt wird.

9. Verfahren zur Herstellung von, insbesondere mehrschichtigen, Rohrkörpern (17) mit mindestens einer sich über seine Länge erstreckenden nebeneinander liegende Längskammern (H, J, K) bildenden Trennwand, unter Verwendung eines Folienbandes (1), **dadurch gekennzeichnet,** daß zunächst auf dem Folienband (1) oder einem abgelängten Folienbandabschnitt ein Trennwandstreifen (15) bzw. ein abgelängter Trennwandstreifenabschnitt in paralleler Ausrichtung zum Folienband bzw. Folienbandabschnitt befestigt wird und dann die Seitenkanten zur Bildung eines endlosen Rohres, von dem dann Rohrkörper abgelängt werden, bzw. direkt zur Bildung eines Rohrkörpers miteinander verbunden werden, wobei mindestens ein zweiter Trennwandstreifen (16) über dem ersten Trennwandstreifen (15) befestigt wird.

10. Verfahren nach Anspruch 9, **dadurch gekennzeichnet,** daß der mindestens ein Trennwandstreifen (15) bzw. ein Trennwandstreifenabschnitt unter Bildung mindestens eines freien Randes (13) beabstandet zu seinen Längsrändern am Folienband bzw. am Folienbandabschnitt befestigt wird.

11. Verfahren nach Anspruch 10, **dadurch gekennzeichnet,** daß mindestens ein freier Rand (13) des Trennwandstreifens (15) bzw. des Trennwandstreifenabschnittes unter einem Winkel zur Fläche des Folienbandes (1) bzw. des Folienbandabschnittes bzw. zu einem anderen Trennwandstreifen bzw. Trennwandstreifenabschnitt angeordnet wird.

## Claims

1. Method for producing in particular multi-layered tubular articles (4, 8, 14) with at least one separating wall forming adjacent longitudinal chambers (A, B; C, D, E; F, G;) extending over the length, by using a foil strip (1), characterised in that first of all onto the foil strip (1) or a cut off section of foil strip a separating wall strip or a cut off section of separating wall strip is attached in parallel direction to the foil strip or foil strip section, and then the side edges are joined to form an endless tube, from which tubular articles are then cut to length, or are joined directly to form a tubular article, wherein the separating wall strip or the separating wall strip section is made from at least one tube (2; 6; 9a) or tube section.

2. Method according to claim 1, characterised in that at least one tube (2) or a tube section is made as an extruded tube.

3. Method according to claim 1, characterised in that at least one tube (6; 9a) or a tube section is made from a foil or a foil section with a joining seam (5; 12).

4. Method according to claim 3, characterised in that the separating wall strip (9) or the separating strip section is formed into U-shape and then both its sides (10, 11) are joined in their parallel side positions to form a tube (9a).

5. Method according to claim 4, characterised in that two sides (10, 11) are joined forming at least one free edge (13).

6. Method according to claim 5, characterised in that at least one free edge (13) is arranged at an angle to the surface of the foil strip (1) or the foil strip section.

7. Method according to one of claims 1 to 6, characterised in that each tube or each tube section is attached along at least one line to the foil strip (1) or foil strip section.

8. Method according to claim 7, characterised in that the attachment is along a line at spaced apart point connections (19).

9. Method for producing in particular multi-layered tubular articles (17) with at least one separating wall forming adjacent longitudinal chambers (H, J, K) extending over the length, by using a foil strip (1), characterised in that first of all on the foil strip (1) or on a cut off section of foil strip a separating wall strip (15) or a cut off separating wall strip section is joined in parallel alignment with the foil strip or foil strip section and then the side edges are joined together to form an endless tube, from which tubular articles are then cut to length, or are joined directly to form a tubular article, wherein at least a second separating wall strip (16) is attached over the first separating wall strip (15).

10. Method according to claim 9, characterised in that the at least one separating wall strip (15) or a separating wall strip section is attached to the foil strip or the foil strip section at a distance from its longitudinal edges forming at least one free edge (13).

11. Method according to claim 10, characterised in that at least one free edge (13) of the separating wall strip (15) or the separating wall section is arranged at an angle to the surface of the foil strip (1) or the foil strip section or to another separating wall strip or separating strip section.

## Revendications

1. Procédé de fabrication de corps tubulaires, en particulier à plusieurs couches (4, 8, 14), comportant au moins une paroi de séparation formant des chambres longitudinales (A,B; C,D, E; F, G) s'étendant sur sa longueur les unes à côté des autres, avec utilisation d'une bande de feuille (1), caractérisé en ce qu'une bande de paroi de séparation ou une section tronçonnée de la bande de paroi de séparation est d'abord fixée sur la bande de feuille (1) ou sur une section tronçonnée de la bande de feuille, parallèlement à la bande de feuille ou à la section de la bande de feuille, les bords latéraux étant ensuite reliés pour former un tube sans fin, à partir duquel sont formés les corps tubulaires, par tronçonnage, ou étant reliés directement pour former un corps tubulaire, la bande de paroi de séparation ou la section de la bande de paroi de séparation étant fabriquée à partir d'au moins un tuyau (2; 6; 9a) ou d'une section de tuyau.

2. Procédé selon la revendication 1, caractérisé en ce qu'au moins un tuyau (2) ou une section de tuyau est fabriqué à partir d'un tuyau extrudé.

3. Procédé selon la revendication 1, caractérisé en ce qu'au moins un tuyau (6; 9a) ou une section de tuyau est fabriqué à partir d'une feuille ou d'une section de feuille avec un joint de liaison (5; 12).

4. Procédé selon la revendication 3, caractérisé en ce que la bande de paroi de séparation (9) ou la section de la bande de paroi de séparation est formée en une forme en U, les deux branches correspondantes (10, 11) étant ensuite reliées dans leurs positions de branche parallèles en un tuyau (9a).

5. Procédé selon la revendication 4, caractérisé en ce que les deux branches (10, 11) sont reliées avec formation d'au moins un bord libre (13).

6. Procédé selon la revendication 5, caractérisé en ce qu'au moins un bord libre (13) est agencé à un angle par rapport à la surface de la bande de feuille (1) ou de la section de la bande de feuille.

7. Procédé selon l'une des revendications 1 à 6, caractérisé en ce que chaque tuyau ou chaque section de tuyau est fixé le long d'au moins une ligne sur la bande de feuille (1) ou sur une section de la bande de feuille.

8. Procédé selon la revendication 7, caractérisé en ce que la fixation le long d'une ligne est réalisée par l'intermédiaire de liaisons par points espacés (19).

9. Procédé de fabrication de corps tubulaires, en particulier à plusieurs couches (17), comportant au moins une paroi de séparation formant des chambres longitudinales (H, J, K) s'étendant sur sa longueur les unes à côté des autres, avec utilisation d'une bande de feuille (1), caractérisé en ce qu'une bande de paroi de séparation (15) ou une section tronçonnée de la bande de paroi de séparation est d'abord fixée sur la bande de feuille (1) ou sur une section tronçonnée de la bande de feuille, parallèlement à la bande de feuille ou à la section de la bande de feuille, les bords latéraux étant ensuite reliés pour former un tube sans fin, à partir duquel sont formés les corps tubulaires, par tronçonnage, ou étant reliés directement pour former un corps tubulaire, au moins une deuxième bande de paroi de séparation (16) étant fixée au-dessus de la première bande de paroi de séparation (15).

10. Procédé selon la revendication 9, caractérisé en ce que la au moins une bande de paroi de séparation (15) ou une section de la bande de paroi de séparation est fixée sur la bande de feuille ou sur une section de la bande de feuille avec formation d'au moins un bord libre (13), espacé de ses bords longitudinaux.

11. Procédé selon la revendication 10, caractérisé en ce qu'au moins un bord libre (13) de la bande de paroi de séparation (15) ou de la section de bande de paroi séparation est agencé à un angle par rapport à la surface de la bande de feuille (1) ou de la section de la bande de feuille ou par rapport à une autre bande de paroi de séparation ou d'une section de bande de paroi de séparation.
